# EUROPEAN PATENT SPECIFICATION

(11) **EP 3 819 866 B1**
(45) Date of publication and mention of the grant of the patent: **09.04.2025**
(21) Application number: 19830290.3
(22) Date of filing: 05.06.2019
(51) Int. Cl.: G06T 7/12, G06T 7/00

(54) **MARKER RECOGNITION METHOD FOR CAMERA DEVICE, AND MARKER RECOGNITION DEVICE**
MARKIERUNGSERKENNUNGSVERFAHREN FÜR EINE KAMERAVORRICHTUNG UND MARKIERUNGSERKENNUNGSVORRICHTUNG
PROCÉDÉ DE RECONNAISSANCE DE MARQUEUR POUR DISPOSITIF DE CAMÉRA, ET DISPOSITIF DE RECONNAISSANCE DE MARQUEUR

(30) Priority: 03.07.2018 JP 2018127092
(43) Date of publication of application: 12.05.2021
(73) Proprietor: Hitachi Astemo, Ltd., Hitachinaka-shi, Ibaraki 312-8503 (JP)
(72) Inventor: IWASAKI Keisuke, Hitachinaka-shi, Ibaraki 312-8503 (JP)
(74) Representative: MERH-IP Matias Erny Reichl Hoffmann Patentanwälte PartG mbB
(86) International application number: PCT/JP2019/022269
(87) International publication number: WO 2020/008787

(56) References cited:
- CN-A- 105 203 045
- JP-A- 2016 103 215
- US-A1- 2015 278 615
- ZHANG TAO ET AL: "Fast and robust road sign detection in driver assistance systems", APPLIED INTELLIGENCE, KLUWER ACADEMIC PUBLISHERS, DORDRECHT, NL, vol. 48, no. 11, 28 May 2018 (2018-05-28), pages 4113 - 4127, XP036606174, ISSN: 0924-669X, [retrieved on 20180528], DOI: 10.1007/S10489-018-1199-X
- ANDREAS MOGELMOSE ET AL: "Vision-Based Traffic Sign Detection and Analysis for Intelligent Driver Assistance Systems: Perspectives and Survey", IEEE TRANSACTIONS ON INTELLIGENT TRANSPORTATION SYSTEMS, IEEE, PISCATAWAY, NJ, USA, vol. 13, no. 4, 1 December 2012 (2012-12-01), pages 1484 - 1497, XP011474105, ISSN: 1524-9050, DOI: 10.1109/TITS.2012.2209421
- BARNES N ET AL: "Real-Time Speed Sign Detection Using the Radial Symmetry Detector", IEEE TRANSACTIONS ON INTELLIGENT TRANSPORTATION SYSTEMS, IEEE, PISCATAWAY, NJ, USA, vol. 9, no. 2, 1 June 2008 (2008-06-01), pages 322 - 332, XP011347119, ISSN: 1524-9050, DOI: 10.1109/TITS.2008.922935
- INOUE, YASUO ET AL.: "Automatic Recognition of Road Signs", PROC. OF SPIE, vol. 4790, 2002, pages 543 - 550, XP055763208

## Description

### Technical Field

The present invention relates to a marker recognition method and a marker recognition device in a camera device.

### Background Art

In recent years, a camera device has been mounted on a vehicle and has become widespread as an in-vehicle camera device. With the widespread use of in-vehicle camera devices, there is an increasing demand for various recognition functions for safe driving and automatic driving. Among them, since the stereo camera device measures the visual information by images and the distance information to an object at the same time, it is possible to grasp various objects around the car (a person, a car, a three-dimensional object, a road surface, a road marker, a sign marker, etc.) in detail, so that it is said that the stereo camera device contributes to improving safety during driving assistance.

The demand for the marker recognition function in stereo camera devices is increasing in Japan and overseas, and improvement in recognition accuracy is required.

As one of the factors that reduce the accuracy of stereo camera devices, there is a problem that a random pattern with many edges, such as tree branches, is mistakenly detected as a circle, and is erroneously recognized as a marker in identification.

In the related art, various technologies and devices related to an in-vehicle camera device mounted on a vehicle and recognizing the situation in front of the vehicle have been proposed. For example, with regard to improving the performance of marker recognition, PTL 1 discloses a technique focusing on improving the accuracy of recognition.

The marker recognition technique described in PTL 1 executes the center estimation process, the radius estimation process, and the identification process of the imaged target circle in order. Then, in the center estimation process, voting is performed for a predetermined length in the normal direction from the edge, and the pixel in which a certain number of votes are collected is set as the estimation center.

### Citation List

### Patent literature

PTL 1: JP 2015-191621

### Summary of Invention

### Technical Problem

However, in the technique described in PTL 1, there is a possibility that as one of the factors of accuracy reduction, a random pattern with many edges, such as tree branches, is mistakenly detected as a circle, and erroneously recognized as a marker in identification.

In other words when the target is a circle, votes for a predetermined length in the normal direction from the edge on the circumference are collected in the center, and as in a large number of tree branches, the number of votes may exceed a certain number even in a pattern with dense edges. In such a case, there is a possibility that an erroneous determination is made in the radius estimation process and the identification process described above, and a large number of tree branches are erroneously recognized as a marker.

An object of the present invention has been made in view of the above points, and is to provide a marker recognition method for a camera device and a marker recognition device capable of improving the marker recognition accuracy by excluding the random pattern such as tree branches, and suppressing incorrect determination of the random pattern as a marker in the circle detection process.

### Solution to Problem

In order to achieve the above object, the present invention is configured as follows.

In a marker identification method for a stereo device, the method includes estimating, from an image captured by the stereo camera device, a circle and a center of the circle, detecting, based on a change in shading of the image, or an intensity image, or the image and the intensity image, a number of edges within a predetermined width in a radial direction of the circle from the center and a radius which is a distance from the center to each of the edges to create a histogram including the number of edges and the radius, selecting, as a radius candidate from the histogram, a radius at which the number of edges is equal to or greater than a predetermined number of edges threshold value, calculating a gradient of the histogram, from the selected radius candidate and a value of the histogram in a vicinity of the selected radius candidate, and performing an identification process on a histogram in which the calculated gradient is equal to or greater than a predetermined gradient threshold value to identify a marker.

In addition, a marker identification device includes an image input unit that receives an image captured by a stereo camera device, an image processing unit that corrects the image received by the image input unit, and an arithmetic processing unit that determines whether the image corrected by the image processing unit is a marker to identify the determined marker, wherein the arithmetic processing unit estimates, from the corrected image, a circle and a center of the circle, detects, based on a change in shading of the image, or an intensity image, or the angle image and the intensity image, a number of edges within a predetermined width in a radial direction of the circle from the center and a radius which is a distance from the center to each of the edges to create a histogram including the number of edges and the radius, wherein the arithmetic processing unit selects a radius at which the number of edges is equal to or greater than a predetermined number of edges threshold value as a radius candidate from the histogram, and calculates a gradient of the histogram from the selected radius candidate and a value of the histogram in a vicinity of the selected radius candidate, and performs an identification process on a histogram in which the calculated gradient is equal to or greater than a predetermined gradient threshold value to identify the marker.

### Advantageous Effects of Invention

According to the present invention, it is possible to provide a marker recognition method for a camera device and a marker recognition device capable of improving the marker recognition accuracy by excluding a random pattern such as tree branches and suppressing incorrect determination of the random pattern as a marker.

### Brief Description of Drawings

[FIG. 1] FIG. 1 is a block diagram which shows the overall configuration of an image processing device in an in-vehicle camera system according to an embodiment of the present invention.
[FIG. 2] FIG. 2 is a diagram which shows a processing flow of a stereo camera according to an embodiment of the present invention.
[FIG. 3.] FIG. 3 is a diagram which shows a timing chart of the process in the stereo camera device.
[FIG. 4A] FIG. 4A is a diagram which shows part of the image stored in the image buffer step through the image processing step.
[FIG. 4B] FIG. 4B is a diagram which shows the processing result obtained by image-processing the image shown in FIG. 4A for use in the marker recognition step.
[FIG. 4C] FIG. 4C is a diagram which shows a histogram obtained based on the change in shading of the image shown in FIG. 4B.
[FIG. 4D] FIG. 4D is a diagram which shows the whole outline flow of the marker recognition process by the marker recognition step.
[FIG. 5] FIG. 5 is a diagram which shows the more detailed processing flow of the present invention.
[FIG. 6A] FIG. 6A is a diagram which shows the histogram created from the captured image of the marker.
[FIG. 6B] FIG. 6B is a diagram which shows the vicinity of a radius candidate in the histogram shown in FIG. 6A.
[FIG. 6C] FIG. 6C is a diagram which shows the histogram created from part of the tree which has been determined to be a circle by the circle detection process though it is not a marker.
[FIG. 6D] FIG. 6D is a diagram which shows the vicinity of a radius candidate in the histogram shown in FIG. 6C.

### Description of Embodiments

Embodiments of the present invention will be described below with reference to the accompanying drawings.

### Embodiments

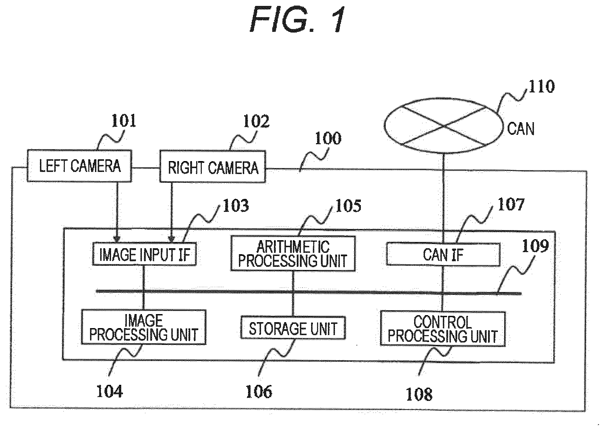

FIG. 1 is a block diagram showing the overall configuration of an image processing device in an in-vehicle camera system according to an embodiment of the present invention.

In FIG. 1, an in-vehicle stereo camera device 100 according to an embodiment is mounted on a vehicle and recognizes the environment outside the vehicle based on the image information of the region to be imaged in front of the vehicle.

The in-vehicle stereo camera device 100 recognizes, for example, a white line on a road, a pedestrian, a vehicle, another three-dimensional object, a signal, a marker, a lighting lamp, and the like, and adjusts the brakes, the steering, etc. of the vehicle (own vehicle) equipped with the in-vehicle stereo camera device 100.

The in-vehicle stereo camera device 100 includes a left camera 101 and a right camera 102, which are two cameras disposed on the left and right to acquire image information, and an image input interface 103 for controlling the imaging operation of the left camera 101 and the right camera 102, and taking in a captured image. The data of the image captured through this image input interface 103 is transmitted through a bus 109, and is processed by an image processing unit 104 and an arithmetic processing unit 105, and the result during the processing, the image data as the final result, and the like are stored in a storage unit 106.

The image processing unit 104 compares a first image obtained from the imaging element of the left camera 101 with a second image obtained from the imaging element of the right camera 102 to perform an image correction process such as a correction of device-specific deviations caused by the imaging element and a noise interpolation on each image, and stores the result in the storage unit 106. Further, the image processing unit 104 calculates the portion corresponding to each other between the first and second images to calculate parallax information, and stores the result in the storage unit 106 as in the above.

The arithmetic processing unit 105 recognizes various objects necessary for perceiving the environment around the own vehicle by using the image and the parallax information (distance information for each point on the image) stored in the storage unit 106. The various objects include a person, a car, another obstacle, a signal, a marker, a car tail lamp and head lights, and the like. Part of these recognition results and intermediate calculation results is stored in the storage unit 106 in the same manner as described above. After performing various objects recognition on the captured image, the arithmetic processing unit 105 calculates the control of the vehicle using these recognition results.

The vehicle control policy obtained as a result of the calculation, and part of the object recognition result are transmitted to an in-vehicle network CAN 110 through a CAN interface 107, and this brakes the vehicle.

Also, with respect to these operations, a control processing unit 108 monitors whether each processing unit is operating abnormally or whether an error has occurred during data transfer, and has a mechanism to prevent abnormal operation.

The image processing unit 104 is connected to the control processing unit 108, the storage unit 106, the arithmetic processing unit 105, the image input interface 103 between the imaging elements of the left camera 101 and the right camera 102, and an input/output unit 107 with an external in-vehicle network 110 via an internal bus 109.

The image processing unit 104, the storage unit 106, the arithmetic processing unit 105, the output unit 107, and the control processing unit 108 are configured by a single computer unit or a plurality of computer units.

The storage unit 106 is configured by a memory or the like that stores, for example, image information obtained by the image processing unit 104 and image information created by the arithmetic processing unit 105 as a result of scanning.

The input/output unit 107 with the external in-vehicle network outputs the information output from the in-vehicle stereo camera device 100 to the control system of the own vehicle via the in-vehicle network CAN 110.

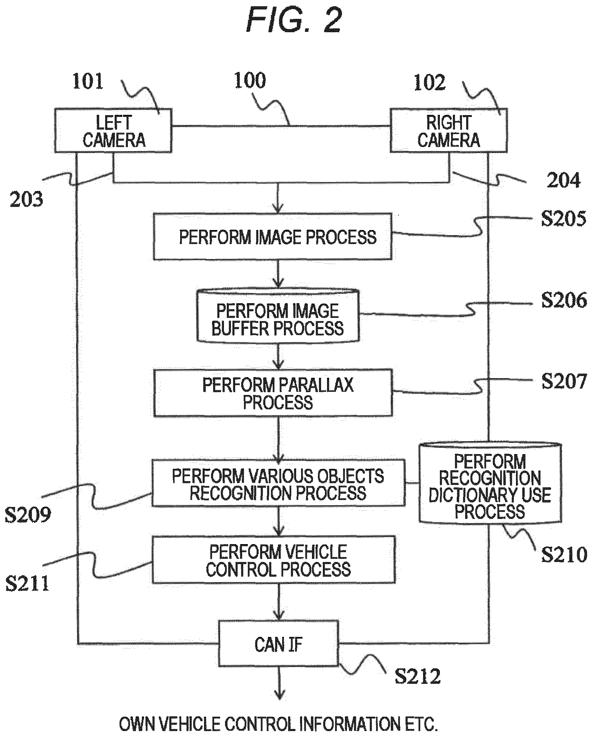

FIG. 2 is a diagram showing a processing flow of a stereo camera 100 according to an embodiment of the present invention.

First, an image is captured by the left and right cameras 101 and 102 in the in-vehicle stereo camera device 100, an image process (step S205) such as correction for absorbing the peculiarity of each imaging element is performed on each of the image data 203 and 204 captured by the left and right cameras 101 and 102, respectively.

The processing result of image processing step S205 is stored in the storage unit 106 by image buffer step S206. The image buffer is provided in the storage unit 106 shown in FIG. 1. Further, the image processing unit 104 collates the images with each other by using the two corrected images (corrected images from the cameras 101 and 102), and as a result, the parallax information of the images obtained by the left and right cameras 101 and 102 is obtained (parallax processing step S207).

Due to the parallax of the left and right images it became clear where a certain point of interest on the target object corresponds to on the images of the left and right cameras 101 and 102, and the distance to the object will be obtained by the principle of triangulation. This is done in parallax processing step S207. Image processing step S205, image buffer step S206, and parallax processing step S207 are performed by the image processing unit 104 shown in FIG. 1, and the finally obtained image and the parallax information is stored in the storage unit 106.

Further, various objects recognition process (step S209) is performed using the above-mentioned stored image and parallax information. Examples of the object to be recognized include a person, a car, another three-dimensional object, a marker, a signal, a tail lamp, and the like, and at the time of recognition, recognition dictionary use step S210 (stored in the storage unit 106) is used as necessary. The recognition dictionary is stored in the storage unit 106.

Furthermore, considering the result of object recognition and the condition of the own vehicle (speed, steering angle, etc.), in vehicle control processing step S211, a policy to, for example, warn the occupant, perform braking such as braking of the own vehicle and adjustment of the steering angle, or control avoidance of the object thereby is determined, and output the result through CAN interface 107 (CAN IF step S212).

The various objects recognition process 209, recognition dictionary use step S210, and vehicle control processing step S211 are performed by the arithmetic processing unit 105 shown in FIG. 1, and the output to the in-vehicle network CAN 110 is performed through the CAN interface 107. Each of these processes and means is configured by, for example, a single computer unit or a plurality of computer units, and is configured so that data can be exchanged with each other.

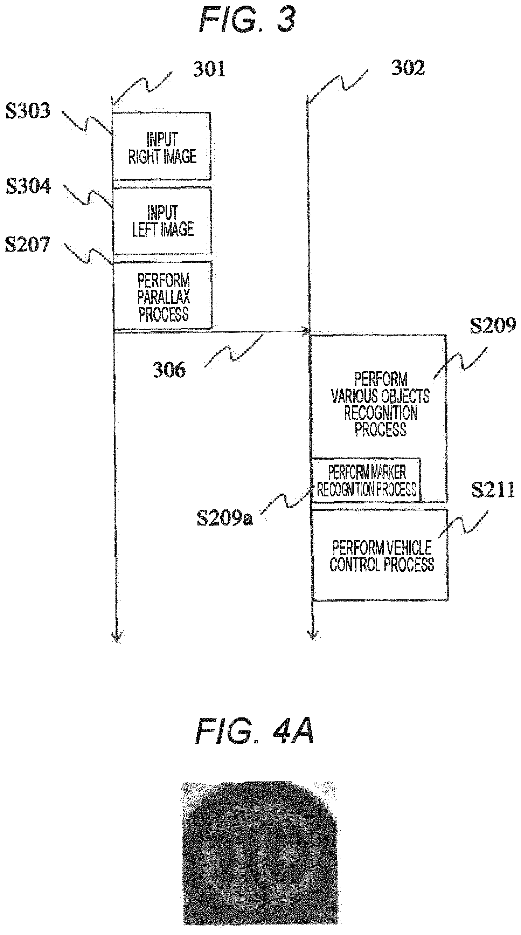

FIG. 3 is a diagram showing a timing chart of the process in the stereo camera device.

In the timing chart of FIG. 3, the processing flows of two systems are shown as a processing flow 301 and a processing flow 302.

The processing flow 301 indicates the processing timing in the image processing unit 104 shown in FIG. 1, and the processing flow 302 indicates the processing timing in the arithmetic processing unit 105 shown in FIG. 1.

In FIG. 3, first, right image input step S303 is performed in the processing flow 301. This corresponds to the process in which the right camera 102 captures an image in FIG. 2, and after that, through the image processing 205, the right image is stored in image buffer step S206.

Next, left image input step S304 is performed. This corresponds to the process in which the left camera 101 captures an image in FIG. 2, and through image processing S205, the left image is stored in image buffer step S206.

Next, parallax processing step S207 is performed. This corresponds to the process in which in FIG. 2, the two images from the left and right cameras 101 and 102 are read out in image buffer processing step S206, parallax is calculated by implement collation between both images, and the parallax information obtained by the calculation is stored in the storage unit 106. At this point, the image and the parallax information are stored in the storage unit 106. In the processing flow 301, the input processing to image buffer step S206 is performed following parallax processing step S207.

Processing information 306 until parallax processing step S207 of the processing flow 301 is transferred to the processing flow 302, and the various objects recognition 209 is performed. Various objects recognition step S209 includes marker recognition step S209a, which will be described later.

The recognition process is performed in the various objects recognition step S209, vehicle control process S211 is performed, and the result is output to the in-vehicle network CAN 110.

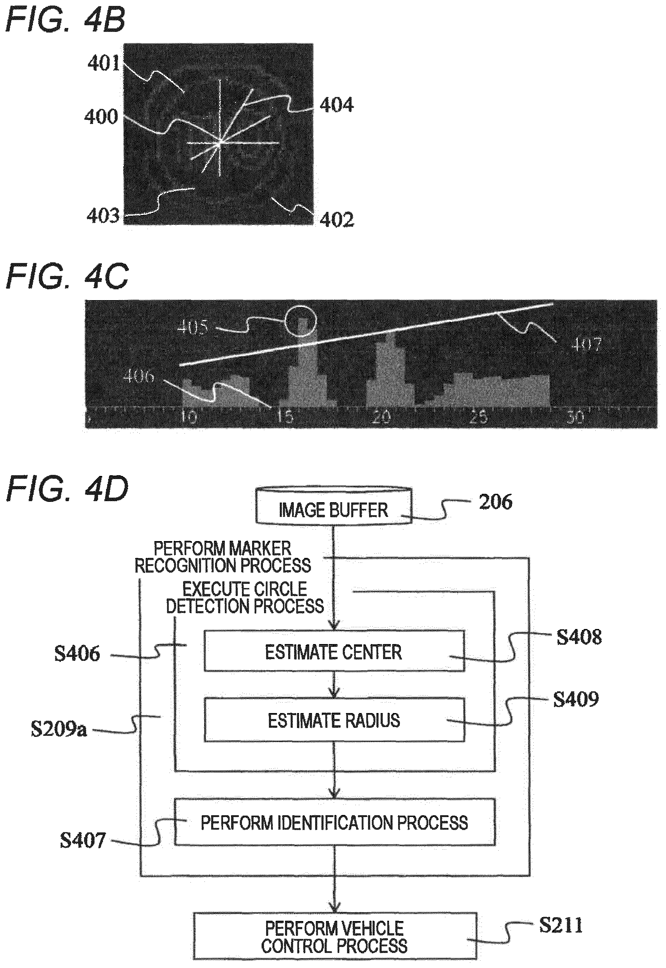

FIGS. 4A, 4B, 4C, and 4D are schematic explanatory views of a marker recognition function for performing marker recognition on an image stored in the image buffer 206, and FIG. 4D shows an overall schematic flow of the marker recognition process according to marker recognition step S209a.

Marker recognition step S209a shown in FIG. 3 includes circle detection processing step S406 and identification processing step S407.

FIG. 4A is a diagram showing part of the image stored in image buffer step S206 through image processing step S205. FIG. 4B is a diagram showing the processing result of image processing the image shown in FIG. 4A for use in marker recognition step S209a, and is an image having brightness at a portion having a large change in shading in the vicinity in the image.

Further, FIG. 4C is a diagram showing a histogram obtained based on the change in shading of the image shown in FIG. 4B.

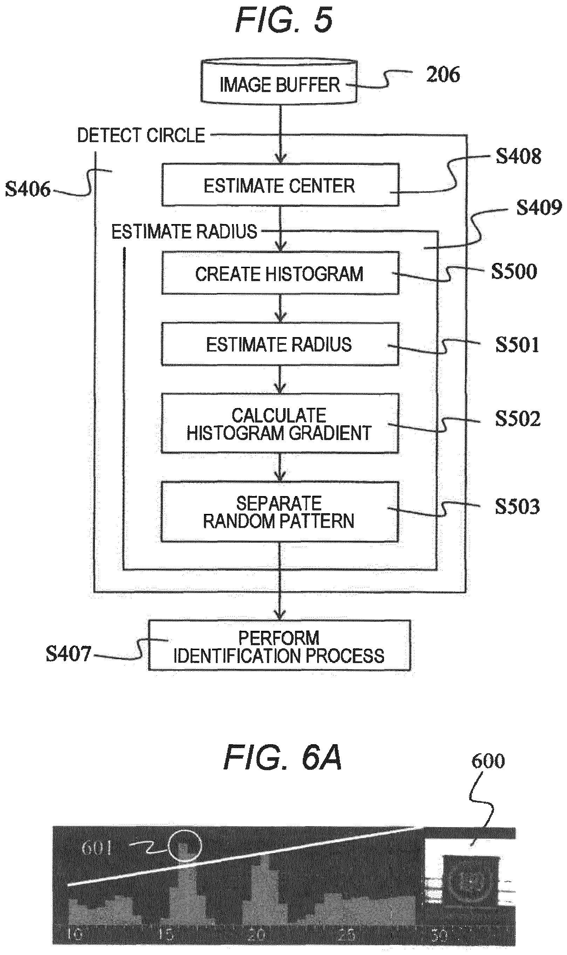

In marker recognition step S209a, first, circle detection processing step S406 (shown in FIG. 4D) in which a circle and the center of the circle are estimated from the image (image captured by the cameras 101 and 102) shown in FIG. 4B is performed. In circle detection processing step S406, the center of the circle is obtained by the "center calculation" . Circle detection processing step S406 is divided into a center estimation (step S408) and a radius estimation (step S409). The details of the radius estimation step S409 will be described later with reference to FIG. 5.

First, in step S408, the center is estimated. A line segment 404 extending in the normal direction is drawn from each edge of the image shown in FIG. 4B, and it is estimated that a point where a certain number or more of intersections of the plurality of line segments 404 overlap each other is the center. In FIG. 4B, 400 is estimated to be the center. Next, in step S409, the radius of a circle 401 (first edge) is estimated based on the histogram shown in FIG. 4C. The identification process (identification (recognition) of the content of the marker) of the marker detected in identification processing step S407 is performed, and vehicle control processing step S211 is executed.

In the histogram of FIG. 4C, the horizontal axis represents the radius from the center 400 shown in FIG. 4B, and the vertical axis represents the number of edges within a predetermined width (within the width in the radial direction). The method of obtaining the histogram in FIG. 4C will be described.

Assume a circle whose radius gradually increases from the center 400 in FIG. 4B. When this circle and an edge (for example, the first edge 401 or the second edge 402) overlap, the number of the overlapping edges is counted and is represented by the vertical axis in FIG. 4C.

When there is a circle like the first edge 401, the number of edges 405 in the histogram shown in FIG. 4C has increased, and when there is no circle like 403 shown in FIG. 4B, the number of edges 406 in the histogram in FIG. 4C is reduced.

A radius at which the number of edges exceeds a predetermined number of edges threshold value 407 in the histogram shown in FIG. 4C is selected as a radius candidate.

The count of the number of edges having a predetermined radius or below from the center 400 may be omitted.

The calculation omission region may be set considering that the marker has a diameter of generally 30 cm or more and the process cannot be performed in identification processing step S407 when a marker at a very distant location is detected. By setting the calculation omission region, the calculation load of the marker recognition unit 209a can be reduced. That is, for a circle having a radius smaller than a predetermined width, it is possible to have a configuration in which the marker is not recognized based on the change in shading.

Due to improvement in the processing capacity of the marker recognition unit 209a, the calculation omission region may be reduced in order to recognize a marker very far away to improve safety.

FIG. 5 is a diagram showing a more detailed processing flow of the present invention, and shows the details of the radius estimation step S409 of the flow shown in FIG. 4D. The circle detection process (step S406) and the identification process (step S407) shown in FIG. 5 are executed by the arithmetic processing unit 105.

In FIG. 5, the random pattern separation is performed in radius estimation step S409. First, in histogram creation step S500, the histogram shown in FIG. 4C is created (creation of a histogram including the number of edges and the radii, each of which is the distance from the center of the circle to the edges).

Next, from the histogram created in step S500, a radius candidate is obtained by the predetermined number of edges threshold value 407. The gradient of the histogram is calculated by histogram gradient calculation step S502 from the obtained radius candidate and the value of the histogram in the vicinity thereof. In random pattern separation step S503, the random pattern is separated by comparing the gradient obtained in histogram gradient calculation step S502 with the predetermined gradient threshold value.

This is based on the principle that a histogram indicating the marker and a histogram indicating a random pattern such as a plurality of tree branches have the different gradients of the histogram, so that the marker and the random pattern can be separated by classifying the gradient of the histogram according to the threshold value.

Then, in step S407, the identification process (marker content identification (recognition)) of the detected marker is performed.

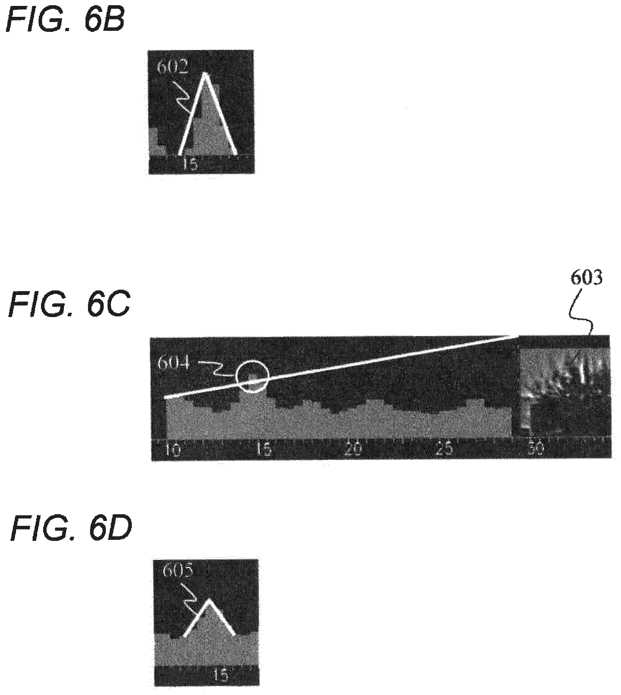

FIGS. 6A, 6B, 6C, and 6D are explanatory diagrams in which the marker pattern and the random pattern are separated by the gradient of the histogram.

FIG. 6A is a diagram showing a histogram created from a captured image of a marker 600. In FIG. 6A, the radius candidate estimated by the marker 600 is represented by 601. FIG. 6B is a diagram showing the vicinity of the radius candidate 601 in the histogram shown in FIG. 6A.

A gradient 602 of the radius candidate 601 is calculated in histogram gradient calculation step S502. There are slopes on both sides of the apex of radius candidate 601 in the calculation of the gradient. The gradients of the slopes on both sides are calculated, and the larger gradient of them is regarded as the gradient 602 of the radius candidate 601.

When the gradient 602 shown in FIG. 6B is greater than or equal to the gradient threshold value, the histogram is identified as a histogram indicating the marker. Since the example shown in FIG. 6B shows a histogram indicating the marker, the gradient 602 is greater than or equal to the gradient threshold value, and the histogram is identified as a histogram indicating the marker (step S503).

FIG. 6C is a diagram showing a histogram created from part 603 of a tree determined to be a circle in circle detection processing step S406 even though it is not a marker. In FIG. 6C, the radius candidate estimated by the tree branch 603 is represented by 604. FIG. 6D is a diagram showing the vicinity of the radius candidate 604 in the histogram shown in FIG. 6C.

A gradient 605 of the radius candidate 604 is calculated in histogram gradient calculation step S502.

Since the example shown in FIG. 6D shows a histogram indicating tree branches, the gradient 605 is below the gradient threshold value, so that the example is identified as a random pattern, and is separated from the marker (step S503) .

The gradient threshold value by which the marker and a random pattern such as tree branches are distinguished can be set at any value depending on the performance of the camera or the like. As an example, the gradient threshold value can be set to 120/3 = 40.

The marker 600 and the random pattern 603 such as tree branches can be separated by comparing the gradient of the histogram with the predetermined gradient threshold value.

As mentioned above, according to an embodiment of the present invention, the circle detection process is performed on the image captured by the cameras (101, 102), the histogram is created, a radius when the number of edges within the predetermined width exceeds the predetermined edge threshold value is regarded as a radius candidate, the gradient of the histogram is calculated from the radius candidate and the value of the histogram in the vicinity thereof, and a histogram whose calculated gradient is equal to or greater than the threshold gradient is identified as a marker.

Therefore, in the circle detection process, it is possible to provide a marker recognition method for a camera device and a marker recognition device capable of improving the marker recognition accuracy by excluding the random pattern such as tree branches, and suppressing incorrect determination of the random pattern as a marker.

In the circle detection process, radius estimation processing step S409 is performed by estimating the center of the circle portion (circle). The configuration may be such that a histogram is created from the radius and the number of edges on the basis of the change in shading of the angle image, the intensity image, or both of them within a predetermined width based on the position away from the estimated center by the radius, the gradient of the histogram is calculated, and the identification process is performed on the histogram whose calculated gradient is equal to or greater than the predetermined gradient threshold value to recognize the marker.

In addition, the configuration may be such that a radius at which the number of edges exceeds the predetermined number of edges threshold value in the histogram is regarded as a radius candidate, the gradient of the histogram is calculated from the radius candidate and the value of the histogram in the vicinity thereof to compare the calculated gradient with the gradient threshold value, and the random pattern is separated.

In the above-described embodiment, a histogram is created from the radius and the number of edges based on the change in shading of both the angle image and the intensity image.

Further, the above-mentioned example is an example in which the marker recognition method for the camera device and the marker recognition device of the present invention are mounted on a vehicle, but the present invention is not limited to the vehicle. It can also be applied to another moving object and a robot.

### Reference Signs List

- 100: stereo camera
- 101: left camera
- 102: right camera
- 103: image input interface
- 104: image processing unit
- 105: arithmetic processing unit
- 106: storage unit
- 107: CAN interface
- 108: control processing unit
- 109: internal bus
- 110: external in-vehicle network

## Claims

1. A computer-implemented marker identification method for a stereo camera device (100), the method comprising:
estimating, from an image captured by the stereo camera device (100), a circle and a center of the circle;
detecting, based on a change in shading of the image, or an intensity image, or the image and the intensity image, a number of edges within a predetermined width in a radial direction of the circle from the center and a radius which is a distance from the center to each of the edges to create a histogram including the number of edges and the radius;
selecting, as a radius candidate from the histogram, a radius at which the number of edges is equal to or greater than a predetermined number of edges threshold value,
calculating, a gradient of the histogram, from the selected radius candidate and a value of the histogram in a vicinity of the selected radius candidate, and
performing an identification process on a histogram in which the calculated gradient is equal to or greater than a predetermined gradient threshold value to identify a marker.

2. The marker identification method for a stereo camera device (100) according to claim 1, wherein
a point at which a certain number or more of intersections of line segments extending in a normal direction from the plurality of edges overlap each other is estimated as the center of the circle.

3. The marker identification method for a stereo camera device (100) according to claim 2, wherein
when the estimated circle is a circle with a radius smaller than the predetermined width, a process of identifying a marker for the circle is not performed.

4. The marker identification method for a stereo camera device (100) according to any one of claims 1to 3, wherein
the stereo camera device (100) is mounted on a vehicle.

5. A marker identification device comprising:
an image input unit that receives an image captured by a stereo camera device (100);
an image processing unit (104) that corrects the image received by the image input unit; and
an arithmetic processing unit (105) that determines whether the image corrected by the image processing unit (104) is a marker to identify the determined marker,
wherein
the arithmetic processing unit (105) estimates, from the corrected image, a circle and a center of the circle, detects, based on a change in shading of the image, or an intensity image, or the image and the intensity image, a number of edges within a predetermined width in a radial direction of the circle from the center and a radius which is a distance from the center to each of the edges to create a histogram including the number of edges and the radius, wherein
the arithmetic processing unit (105) selects a radius at which the number of edges is equal to or greater than a predetermined number of edges threshold value as a radius candidate from the histogram, and
calculates a gradient of the histogram from the selected radius candidate and a value of the histogram in a vicinity of the selected radius candidate, and performs an identification process on a histogram in which the calculated gradient is equal to or greater than a predetermined gradient threshold value to identify the marker.

6. The marker identification device according to claim 5, wherein
the arithmetic processing unit (105) estimates, as the center of the circle, a point at which a certain number or more of intersections of line segments extending in a normal direction from the plurality of edges overlap each other.

7. The marker identification device according to claim 6, wherein
when the estimated circle is a circle with a radius smaller than the predetermined width, the arithmetic processing unit (105) does not perform a process of identifying a marker for the circle.

8. The marker identification device according to any one of claims 5 to 7, wherein
the stereo camera device (100) is mounted on a vehicle.

## Patentansprüche

1. Computerimplementiertes Verfahren zur Markierungsidentifizierung für eine Stereo-Kameravorrichtung (100), wobei das Verfahren Folgendes umfasst:
Schätzen aus einem Bild, das durch die Stereo-Kameravorrichtung (100) erfasst worden ist, eines Kreises und eines Kreismittelpunkts;
Detektieren basierend auf einer Änderung in der Schattierung des Bildes oder einem Intensitätsbild oder dem Bild und dem Intensitätsbild einer Zahl von Kanten innerhalb einer vorgegebenen Breite von dem Mittelpunkt in einer radialen Richtung des Kreises und eines Radius, der eine Entfernung von dem Mittelpunkt zu jeder der Kanten ist, um ein Histogramm zu erzeugen, das die Zahl der Kanten und den Radius enthält;
Auswählen eines Radius, an dem die Zahl der Kanten größer oder gleich einem vorgegebenen Schwellenwert für die Zahl von Kanten ist, als einen Radius-Kandidaten aus dem Histogramm;
Berechnen eines Gradienten des Histogramms aus dem ausgewählten Radius-Kandidaten und einem Wert des Histogramms in der Nähe des ausgewählten Radius-Kandidaten, und
Durchführen eines Identifizierungsvorgangs auf einem Histogramm, in dem der berechnete Gradient größer oder gleich einem vorgegebenen Schwellenwert für den Gradienten ist, um eine Markierung zu identifizieren.

2. Verfahren zur Markierungsidentifizierung für eine Stereo-Kameravorrichtung (100) nach Anspruch 1, wobei
ein Punkt, an dem mindestens eine bestimmte Zahl von Schnittpunkten von Liniensegmenten, die sich von den mehreren Kanten in einer Normalenrichtung erstrecken, einander überlappen, als der Mittelpunkt des Kreises geschätzt wird.

3. Verfahren zur Markierungsidentifizierung für eine Stereo-Kameravorrichtung (100) nach Anspruch 2, wobei
dann, wenn der geschätzte Kreis ein Kreis ist, dessen Radius kleiner ist als die vorgegebene Breite, kein Vorgang des Identifizierens einer Markierung für den Kreis durchgeführt wird.

4. Verfahren zur Markierungsidentifizierung für eine Stereo-Kameravorrichtung (100) nach einem der Ansprüche 1 bis 3, wobei
die Stereo-Kameravorrichtung (100) auf einem Fahrzeug montiert ist.

5. Vorrichtung zur Markierungsidentifizierung, die Folgendes umfasst:
eine Bildeingabeeinheit, die ein Bild empfängt, das durch eine Stereo-Kameravorrichtung (100) erfasst worden ist;
eine Bildverarbeitungseinheit (104), die das Bild, das von der Bildeingabeeinheit empfangen worden ist, korrigiert; und
eine Arithmetik-Verarbeitungseinheit (105), die bestimmt, ob das Bild, das von der Bildverarbeitungseinheit (104) korrigiert worden ist, eine Markierung ist, um die bestimmte Markierung zu identifizieren,
wobei
die Arithmetik-Verarbeitungseinheit (105) aus dem korrigierten Bild einen Kreis und einen Mittelpunkt des Kreises schätzt, basierend auf einer Änderung der Schattierung des Bildes oder einem Intensitätsbild oder dem Bild und dem Intensitätsbild eine Zahl von Kanten innerhalb einer vorgegebenen Breite von dem Mittelpunkt in einer radialen Richtung des Kreises und einen Radius, der eine Entfernung von dem Mittelpunkt zu jeder der Kanten ist, detektiert, um ein Histogramm zu erzeugen, das die Zahl von Kanten und den Radius enthält, wobei
die Arithmetik-Verarbeitungseinheit (105) einen Radius, bei dem die Zahl der Kanten größer oder gleich einem vorgegebenen Schwellenwert für die Zahl von Kanten ist, als einen Radius-Kandidaten aus dem Histogramm auswählt, und
einen Gradienten des Histogramms aus dem ausgewählten Radius-Kandidaten und einem Wert des Histogramms in der Nähe des ausgewählten Radius-Kandidaten berechnet und einen Identifizierungsvorgang auf einem Histogramm durchführt, in dem der berechnete Gradient größer oder gleich einem vorgegebenen Schwellenwert für den Gradienten ist, um die Markierung zu identifizieren.

6. Vorrichtung zur Markierungsidentifizierung nach Anspruch 5, wobei
die Arithmetik-Verarbeitungseinheit (105) einen Punkt, an dem eine bestimmte Zahl oder mehr Schnittpunkte von Liniensegmenten, die sich in der Normalenrichtung von den mehreren Kanten erstrecken, einander überlappen, als den Mittelpunkt des Kreises schätzt.

7. Vorrichtung zur Markierungsidentifizierung nach Anspruch 6, wobei
die Arithmetik-Verarbeitungseinheit (105) dann, wenn der geschätzte Kreis ein Kreis mit einem Radius ist, der kleiner ist als die vorgegebene Breite, keinen Vorgang zum Identifizieren einer Markierung für den Kreis durchführt.

8. Vorrichtung zur Markierungsidentifizierung nach einem der Ansprüche 5 bis 7, wobei
die Stereo-Kameravorrichtung (100) auf einem Fahrzeug montiert ist.

## Revendications

1. Procédé d'identification de marqueur implémenté par ordinateur pour un dispositif de caméra stéréoscopique (100), le procédé comprenant les étapes consistant à :
estimer, à partir d'une image capturée par le dispositif de caméra stéréoscopique (100), un cercle et un centre du cercle ;
détecter, sur la base d'un changement d'ombrage de l'image, ou d'une image d'intensité, ou de l'image et de l'image d'intensité, un nombre de bords à l'intérieur d'une largeur prédéterminée dans une direction radiale du cercle depuis le centre et un rayon qui est une distance depuis le centre jusqu'à chacun des bords pour créer un histogramme incluant le nombre de bords et le rayon ;
sélectionner, à titre de rayon candidat à partir de l'histogramme, un rayon auquel le nombre de bords est égal ou supérieur à une valeur seuil de nombre de bords prédéterminée,
calculer un gradient de l'histogramme à partir du rayon candidat sélectionné et d'une valeur de l'histogramme dans un voisinage du rayon candidat sélectionné, et
effectuer un processus d'identification sur un histogramme dans lequel le gradient calculé est égal ou supérieur à une valeur seuil de gradient prédéterminée pour identifier un marqueur.

2. Procédé d'identification de marqueur pour un dispositif de caméra stéréoscopique (100) selon la revendication 1, dans lequel
un point auquel un certain nombre ou plus d'intersections de segments de lignes s'étendant dans une direction normale depuis la pluralité de bords sont en chevauchement mutuel est estimé comme étant le centre du cercle.

3. Procédé d'identification de marqueur pour un dispositif de caméra stéréoscopique (100) selon la revendication 2, dans lequel
quand le cercle estimé est un cercle avec un rayon inférieur à la largeur prédéterminée, un processus d'identification d'un marqueur pour le cercle n'est pas effectué.

4. Procédé d'identification de marqueur pour un dispositif de caméra stéréoscopique (100) selon l'une quelconque des revendications 1 à 3, dans lequel
le dispositif de caméra stéréoscopique (100) est monté sur un véhicule.

5. Dispositif d'identification de marqueur comprenant :
une unité d'entrée d'image qui reçoit une image capturée par un dispositif de caméra stéréoscopique (100) ;
une unité de traitement d'image (104) qui corrige l'image reçue par l'unité d'entrée d'image ; et
une unité de traitement arithmétique (105) qui détermine si l'image corrigée par l'unité de traitement d'image (104) est un marqueur pour identifier le marqueur déterminé,
dans lequel
l'unité de traitement arithmétique (105) estime, à partir de l'image corrigée, un cercle et un centre du cercle, détecte, sur la base d'un changement d'ombrage de l'image, ou d'une image d'intensité, ou de l'image et de l'image d'intensité, un nombre de bords à l'intérieur d'une largeur prédéterminée dans une direction radiale du cercle depuis le centre et un rayon qui est une distance depuis le centre jusqu'à chacun des bords pour créer un histogramme incluant le nombre de bords et le rayon, dans lequel
l'unité de traitement arithmétique (105) sélectionne un rayon auquel le nombre de bords est égal ou supérieur à une valeur seuil de nombre de bords prédéterminée, à titre de rayon candidat à partir de l'histogramme, et calcule un gradient de l'histogramme à partir du rayon candidat sélectionné et d'une valeur de l'histogramme dans un voisinage du rayon candidat sélectionné, et effectue un processus d'identification sur un histogramme dans lequel le gradient calculé est égal ou supérieur à une valeur seuil de gradient prédéterminée pour identifier le marqueur.

6. Dispositif d'identification de marqueur selon la revendication 5, dans lequel l'unité de traitement arithmétique (105) estime, comme étant le centre du cercle, un point auquel un certain nombre ou plus d'intersections de segments de lignes s'étendant dans une direction normale depuis la pluralité de bords sont en chevauchement mutuel.

7. Dispositif d'identification de marqueur selon la revendication 6, dans lequel quand le cercle estimé est un cercle avec un rayon inférieur à la largeur prédéterminée, l'unité de traitement arithmétique (105) n'effectue pas de processus d'identification d'un marqueur pour le cercle.

8. Dispositif d'identification de marqueur selon l'une quelconque des revendications 5 à 7, dans lequel
le dispositif de caméra stéréoscopique (100) est monté sur un véhicule.
